# EUROPEAN PATENT APPLICATION

(11) **EP 1 184 775 A2**
(43) Date of publication of application: **06.03.2002**
(21) Application number: 01306132.0
(22) Date of filing: 17.07.2001
(51) Int. Cl.: G06F 3/023

(54) **Text input method for an electronic device**

(30) Priority: 01.09.2000 GB 0214791
(71) Applicant: NOKIA MOBILE PHONES LTD., 02150 Espoo (FI)
(72) Inventor: Davies, Ean, Guildford, Surrey GU1 4DE (GB)
(74) Representative: Read, Matthew Charles

(57) **Abstract**

An electronic device is disclosed and includes a user interface (2), a display (3) for displaying text entered via the user interface (2) and a memory (16, 17) for storing a pre-programmed text string. The user interface (2) includes a key, the text string being recalled from the memory, entered and displayed at a designated text entry point specified by the user in response to operation of said key. Preferably, the electronic device is a mobile telecommunications device.

## Description

The present invention relates to a portable electronic device. In particular, the electronic device to which this invention relates is a mobile telecommunications device such as a telephone but it could also be any other type of electronic device including, for example, a personal data assistant (PDA).

A conventional mobile telephone includes a keypad having first group of alphanumeric keys by means of which a user can enter a telephone number, write a text message (SMS), write a name associated with a telephone number and input other information into the telephone. Each key is generally provided with a figure "0-9" or a sign "#" or "*" often used in text editing. In alpha mode, each key is associated with a number of letters and special signs to enable text input.

It has become desirable to improve the speed at which the functions of a mobile telephone can be activated and in which information, especially text, can be input. In a conventional mobile telephone, the input of text is a slow process as each button on the keypad represents several different characters and so multiple presses of the same button is necessary to scroll through each character associated with that particular button until the required character is located so that it can then be selected. For example, to input the word "files" into a telephone having a conventional keypad requires a total of 15 separate key presses, i.e. the button no. 3 must be pressed three times to display the letter "f"; the button no. 4 must be pressed three times to display the letter "i"; the button no. 5 must be pressed three times to display the letter "1"; the button no. 3 must be pressed twice to display the letter "e"; and the button no. 7 must be pressed four times to display the letter "s".

There is a new generation of mobile telephones that can be used to access the internet such as the WAP (wireless application protocol) telephones. This is an industry specification agreed by most of the major telephone manufacturers and service providers that allows a WAP enabled mobile telephone, pager or personal data assistant owner to access the internet, effectively turning such devices into web browsers. The text entry problems mentioned above are exacerbated with telephones of this type as larger quantities of information needs to be input into such devices to, for example, conduct a search using a search engine, enter passwords to access a subscriber based web site or view a particular URL address, so it is presently slow and tiring to enter information using the conventional technique.

One known way of overcoming the inflexibility of a conventional keypad is simply to reduce the size of each button so that a larger number of them can be incorporated into the telephone thereby reducing the number of functions that each button performs or the number of characters that must be entered using a single button. However, this makes the buttons harder to operate, increases the number of input errors and spoils the appearance of the device.

It is also known to provide predictive text entry software to improve text entry speed. With this system, the user presses a series of keys and it compares all the possible words having that "key signature" with a stored dictionary. For example, to enter the word "files", the user only needs to make 5 key presses namely, button no. 3 followed by buttons numbered 4,5,3 and 7. The system compares this series of key presses with the stored dictionary, predicts the required word and enters it accordingly.

It is also desirable, for example when entering text messages, to enter a frequently used stock phrase or word such as "hello", "urgent", "please reply ASAP", or the user's contact address. At present, it is necessary to enter each of these phrases explicitly each time use needs to be made of them and this is time consuming, even when text prediction software such as that mentioned in the previous paragraph is used.

The present invention seeks to improve the ease by which information including text and other characters, such as an SMS text message in a mobile telephone, can be input into an electronic device.

According to the present invention there is provided an electronic device including a keypad to input text, a display for displaying text entered via the keypad and a memory for storing a pre-programmed text string, wherein the keypad is configured so that text string is recalled from the memory, input and displayed at a cursor position in response to operation of one key, the cursor position being selected by the user before operation of said key.

In one embodiment, the display is configured to display text string recalled from the memory before input and display of the text string at the selected cursor position in response to operation of said one key.

Preferably, different text strings stored in the memory are assignable to different keys such that a required text string is recalled from the memory, input and displayed at a cursor position in response to operation of the one key to which the required text string has been assigned.

The display is preferably configured to display a plurality of separate text strings recalled from the memory before input of a required text string at the selected cursor position.

In a preferred embodiment, said one key is operable to select one of said recalled text strings, and input and display said text string at the cursor position selected by the user after display of the plurality of separate text strings.

Preferably, text string accessed from the memory is input and displayed at the selected cursor position in response to operation of the appropriate key for a predetermined time period.

The present invention also provides a mobile telecommunications device including a keypad and a display operable to compose and transmit text messages through a mobile telecommunications network, keys of the keypad being operable to present individual alphanumeric characters on the display for composing a text message, and wherein the keypad is operable to insert individually selectable pre-stored words or phrases into the message during the composition thereof.

The message preferably comprises an SMS or part of a WAP communication protocol. Alternatively, the message comprises a URL.

The present invention also provides a method of entering text in an electronic device including a keypad to input text, a display for displaying text entered via the keypad and a memory for storing a pre-programmed text string, including the step of operating one key to recall a text string from the memory, input and display said text string at a cursor position selected by the user before operation of said key.

In one embodiment, the method includes the step of operating the key for a predetermined time period.

Preferably, the recalled text string is displayed before input and display of the text string at the selected cursor position in response to operation of said one key.

In one embodiment, the method includes the step of operating said one key more than once to recall, input and display the text string at the selected cursor position.

In another embodiment, a plurality of text strings are storable in the memory, each text string being assignable to a different key and the method includes the step of operating one key to which a selected text string has been assigned to recall, input and display said selected text string at the cursor position.

In yet another embodiment, a plurality of text strings recalled from the memory are displayed before input and display of a selected text string at the cursor position, the method including operating said one key to recall and display said plurality of text strings, select one text string from those displayed and enter and display said selected text string at the cursor position.

The present invention also provides a method of composing text messages to be sent over a mobile telecommunications network using a mobile telecommunications device including a keypad and a display, the method including the steps of operating the keys of a keypad to present individual alphanumeric characters on the display for composing a text message, and the step of operating the keypad to insert individually selectable pre-stored words or phrases into the message during composition thereof.

Embodiments of the invention will now be described, by way of example only, with reference to the accompanying drawings, in which:-
Figure 1 is an illustration showing a perspective view of a mobile telephone according to the invention;
Figure 2 is schematic illustration of the main components of the mobile telephone shown in Figures 1 for connection to a cellular or cordless network; and
Figure 3 is a flow chart showing the sequence of steps involved in entering a text message in the telephone shown in Figure 1;
Figures 4A to 4C illustrate a series of schematic representations of the front of a mobile telephone according to the invention showing the display during the stages of entry of a text message in accordance with the sequence of steps shown in Figure 3;
Figure 5 is a flow chart showing the sequence of steps involved in entering a text message in accordance with an alternative embodiment; and
Figures 6A and 6B illustrates a series of schematic representations of the front of a mobile telephone according to the invention showing the display during the stages of entry of a text message in accordance with the sequence of steps shown in Figure 5.

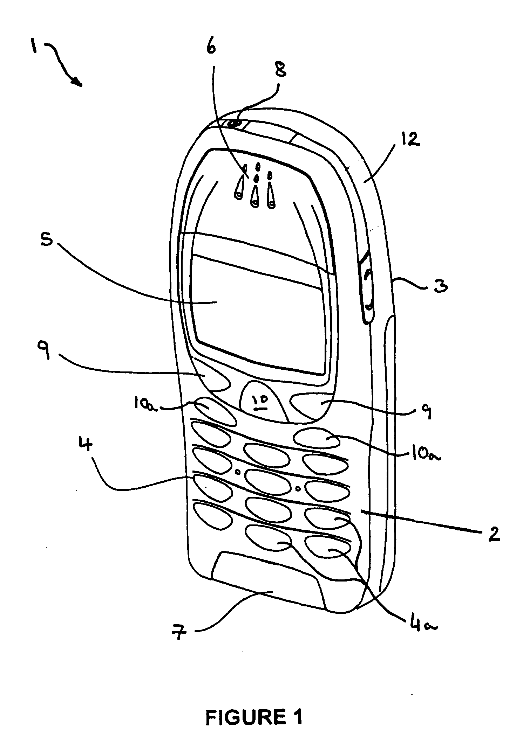

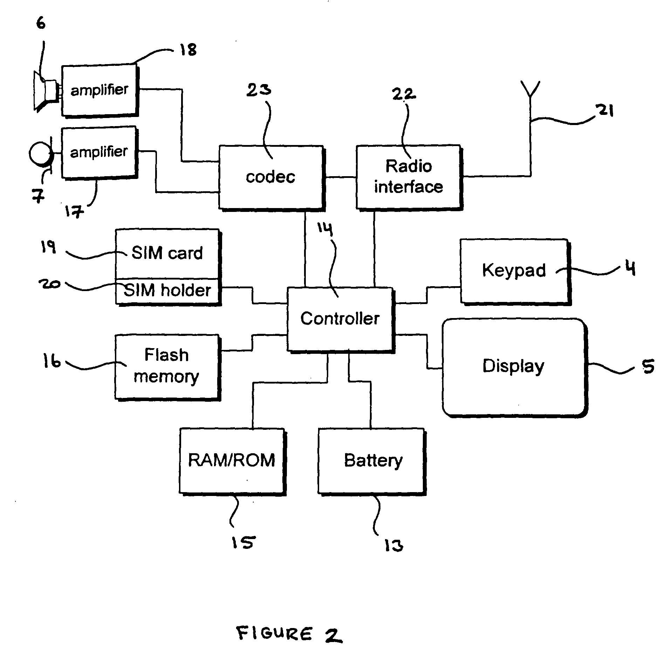

The general components and operation of a mobile telephone 1 will now be described with reference to Figures 1 and 2. The telephone 1 has a front face 2 and rear face 3 and comprises a user interface having a keypad 4, a display 5, an ear piece 6, a microphone 7 and an on/off key 8. The telephone 1 is adapted for communication via a wireless telecommunications network, e.g. a cellular network. However, the telephone 1 could also have been designed for a cordless network.

The keypad 4 has a first group of keys which are alphanumeric and by means of which a user can enter a telephone number, write a text message (SMS) or write a name associated with a particular number, etc.

The keypad 4 additionally includes two soft keys 9, the functionality of which depends on the state of the telephone and the navigation in the menu by means of a navigation key 10, and two call handling keys 10a which can be used for establishing a call or a conference call, terminating a call or rejecting an incoming call.

Figure 2 illustrates the main parts of the telephone 1 which is adapted for use in connection with a GSM network or any other telephone network. The telephone 1 may also be configured to meet the wireless application protocol specification (WAP). Signal processing is carried out under the control of a digital micro-controller 14 which has an associated RAM/ROM 15 and a flash memory 16. Electric analogue audio signals are produced by microphone 7 and amplified by preamplifier 17. Similarly, analogue audio signals are fed to ear piece 6 through amplifier 18. The micro-controller 14 receives instruction signals from the keypad 4 including the soft keys 9 and navigation key 10 and controls the operation of the display 5.

Information concerning the identity of a user is held on a smart card 19 in the form of a GSM SIM card. The SIM card 16 is removably received in a SIM card holder 20. Radio signals are transmitted and received by means of an antenna 21 connected through an rf stage 22 to a codec 23 configured to process signals under the control of the micro-controller 14. Thus, in use, for speech, the codec 23 receives analogue signals from microphone amplifier 17, digitises them into a form suitable for transmission and feeds them to the rf stage 22 for transmission through antenna element 21 to the public land mobile network (PLMN). Similarly, received signals are fed through the antenna element 21 to be demodulated by the rf stage 22 and fed to codec 23 so as to produce analogue signals fed to amplifier 18 and ear piece 6. The device is driven by the removable battery pack 13.

A plurality of frequently used stock words or phrases are stored in the memory 15 of the telephone or in the SIM card 19. When a text message such as an SMS is to be entered, the pre-stored phrases can be entered by the user in addition to conventional text entry in which each letter or character is entered individually. The pre-stored words or phrases can be programmed into the memory by the user or can be pre-programmed by the telephone manufacturer, or both.

In a first arrangement, one button is dedicated to the entry of a word or phrase stored in the memory 17. For example, the "#" or "*" button is used. When this button is pressed for a sufficient length of time, a list of all the pre-programmed words and/or phrases stored in the memory is displayed on the display 5. The required word or phrase can then be entered and displayed at the selected cursor position by selecting it from the list, using the same or an alternative button. For example, cursor keys, roller, stylus or a joystick could be used to select the appropriate word and/or phrase from the list. When the same button is used, rapid presses of the button may scroll down the list highlighting each phrase. To select the required phrase, the user allows one phrase to remain highlighted for a predetermined interval. On expiry of that interval, a further press of the same button inputs and displays the highlighted phrase at the selected cursor position. In another arrangement, the user could hold their finger on the key to scroll down the list of phrases, the finger being removed when the chosen phrase is reached, that phrase being input and displayed at the selected cursor position after a predetermined time period after release of the key.

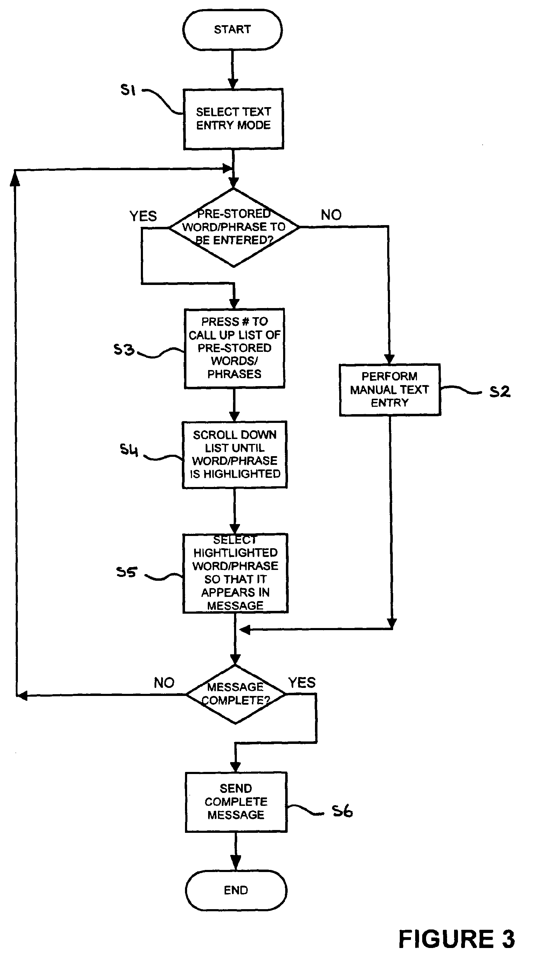

The sequence of steps involved in entering a text message in this embodiment is illustrated in the flow chart of Figure 3. In this example, the text message comprises an SMS. In step S1, the user selects the text message entry mode. If no pre-stored word or phrase is to be entered, the user proceeds to enter the text message by selecting each letter individually in accordance with the conventional method (step S2). If a pre-stored word or phrase is to be entered, the user presses a designated key such as the "#" key to call up a list of all the pre-programmed words or phrases (Step S3). The user can then scroll through the list (Step S4) until the desired word or phrase is highlighted. The user then selects the desired word or phrase (Step S5) to include it in the body of the text message. When the message is complete, the user can then send the message (Step S6).

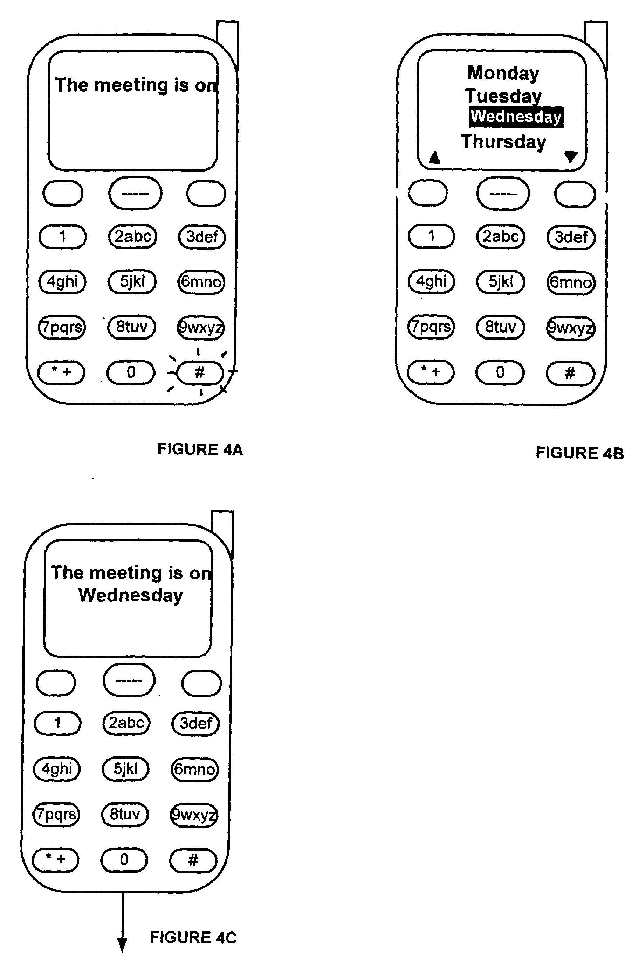

Figures 4A to 4C shows the front face of a mobile telephone in order to show the display changes during entry of a text message. In Figure 4A, the phrase "The meeting is on" has been entered using the keypad in a conventional manner. The user now wishes to enter a word which is stored in the memory. To do this, the user presses the "#" key to call up a list of pre-programmed words which, as shown in Figure 4B, is a list of the days in the week. To select the required day, the user scrolls through the list using the # key until the required day is highlighted. In the present case, "Wednesday" is shown highlighted in Figure 4B. To enter the highlighted word so that it appears in the body of the text message, as shown in Figure 4C, the # key is pressed again or alternatively, the word is automatically entered after it remains highlighted for a predetermined length of time or when the user's finger is removed from the button, as explained above.

In an alternative embodiment, a different word or phrase is assigned to each button of the keypad 4. When a text message is being entered, the user presses the keys in the conventional manner described in the introduction to the specification. When a frequently used phrase or word that is stored in the memory is to be entered, the user selects the cursor position at which the word or phrase is to be entered and presses a designated button on the keypad 4 and holds it down for a sufficient length of time to recall the word or phrase assigned to that particular button. The required word or phrase is then entered and displayed on the display 5 at the selected position. Manual text entry can then be continued, as before.

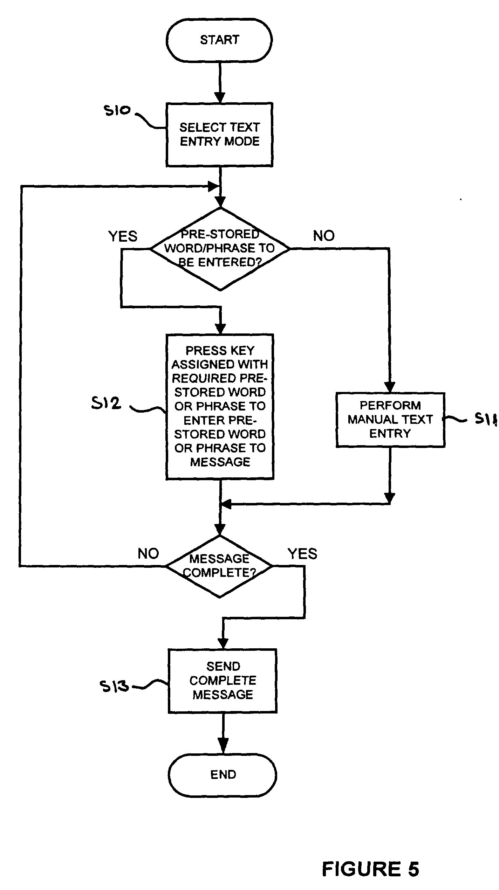

The sequence of steps involved in entering a text message according to this embodiment is shown in Figure 5. In Step S10 the user selects the text message entry mode. If no pre-stored word or phrase is to be entered, the user proceeds to enter the text message by selecting each letter individually in accordance with the conventional method (step S11). If a pre-stored word or phrase is to be entered, the user presses a specific key which has been pre-programmed with the particular word or phrase. The phrase is then entered in the body of the text message (Step S12). When the message is complete, the user can then send the message (Step S13).

Optionally, the word or phrase assigned to a particular key may be displayed on the display before it is input and displayed at the selected text entry or cursor position. A further press of the same button may then input and display the phrase at the selected position. Alternatively, the user may see the displayed phrase and, if they want to input it and display it at the selected text entry position, they maintain the key in a pressed state for a predetermined time period. If the finger is removed before expiry of the time period, the phrase is not input and displayed at the selected text entry position.

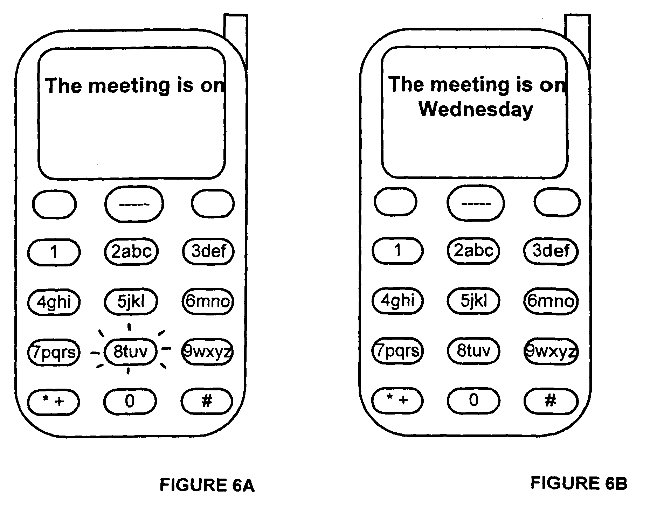

Figures 6A and 6B shows the front face of a mobile telephone to illustrate how the display changes during entry of a text message according to the sequence of events described with reference to Figure 5. In this embodiment, the user enters the phrase "The meeting is on" in a conventional manner. To select and enter "Wednesday", the user presses the button to which this particular word has been assigned for a predetermined length of time sufficient to enter the word in the body of the message. In this example, the word "Wednesday" has been assigned to the button marked "8tuv" and so this button is pressed and held for a predetermined time period to enter the word "Wednesday", as shown in Figure 6B. As explained above, the word may be displayed before it is entered into the body of the message in which case a further press of the button may be required.

Many modifications and variations of the invention falling within the terms of the appended claims will be apparent to those skilled in the art and the foregoing description should be regarded as a description of the preferred embodiments only. For example, although the previously described examples relate to the composition of an SMS, the procedures can also be used to compose a message for use in a WAP communication protocol or for setting up a URL.

## Claims

1. An electronic device including a keypad to input text a display for displaying text entered via the keypad and a memory for storing a pre-programmed text string; wherein the keypad is configured so that text string is recalled from the memory, input and displayed at a cursor position in response to operation of one key, the cursor position being selected by the user before operation of said key.

2. An electronic device according to claim 1, wherein said display is configured to display text string recalled from the memory before input and display of the text string at the selected cursor position in response to operation of said one key.

3. An electronic device according to claim 1 or claim 2 wherein different text strings are assignable to different keys such that a required text string is recalled from the memory input and displayed at the cursor position in response to operation of the one key to which the required text string has been assigned.

4. An electronic device according to claim 2, wherein said display is configured to display a plurality of separate text strings recalled from the memory before input of a required text string at the selected cursor position.

5. An electronic device according to claim 4, wherein said one key is operable to select one of said accessed text strings and input and display said text strings at the cursor position selected by the user after display of the plurality of separate text strings.

6. An electronic device according to any preceding claim, wherein text string is recalled from the memory, entered and displayed at the selected cursor position in response to operation of the appropriate key for a predetermined time period.

7. An electronic device according to any preceding claim comprising a mobile telephone.

8. A mobile telecommunications device including a keypad and a display operable to compose and transmit text messages through a mobile telecommunications network, keys of the keypad being operable to present individual alphanumeric characters on the display for composing a text message, and wherein the keypad is operable to insert individually selectable pre-stored words or phrases into the message during the composition thereof.

9. A mobile telecommunications device according to claim 8, wherein the message comprises an SMS.

10. A mobile telecommunications device according to claim 9, wherein the message comprises part of a WAP communication protocol.

11. A mobile telecommunications device according to claim 10, wherein the message comprises a URL.

12. A method of entering text in an electronic device including a keypad to input text, a display for displaying text entered via the keypad and a memory for storing a pre-programmed text string, wherein the method includes the step of operating one key to recall a text string from the memory, input and display said text string at a cursor position selected by the user before operation of said key.

13. A method according to claim 12, wherein the method includes the step of operating the key for a predetermined time period.

14. A method according to claim 12 or 13, wherein the recalled text string is displayed before input and display of the text string at the selected cursor position in response to operation of said one key.

15. A method according to claim 14, including the step of operating said one key more than once to recall input and display the text string at the selected cursor position.

16. A method according to any of claims 13 to 15, wherein a plurality of text strings are stored in the memory, each text string being assignable to a different key and the method includes the step of operating one key to which a selected text string has been assigned to recall, input and display said selected text string at the cursor position.

17. A method according to claim 14 or 15, wherein a plurality of text strings recalled from the memory are displayed before input and display of a selected text string at the cursor position, the method including operating said one key to recall and display said plurality of text strings, select one text string from those displayed and input and display said selected text string at the cursor position.

18. A method of composing text messages to be sent over a mobile telecommunications network using a mobile telecommunications device including a keypad and a display, the method including the steps of operating the keys of a keypad to present individual alphanumeric characters on the display for composing a text message, and the step of operating the keypad to insert individually selectable pre-stored words or phrases into the message during composition thereof.
